# EUROPEAN PATENT APPLICATION

(11) **EP 4 764 834 A2**
(43) Date of publication of application: **24.06.2026**
(21) Application number: 26165416.4
(22) Date of filing: 17.03.2026
(51) Int. Cl.: G06F 8/65, G06F 8/658

(54) **METHOD AND APPARATUS FOR ADDRESS-BASED PATCH EXECUTION IN ROM-BASED SYSTEMS**

(30) Priority: 26.11.2025 CN 202511758682
(71) Applicant: XG TECH PTE. LTD., Singapore 179098 (SG)
(72) Inventor: LIN, Tao, 179098 Singapore (SG); ZHANG, Wenbin, 179098 Singapore (SG)
(74) Representative: Epping - Hermann - Fischer

(57) **Abstract**

Disclosed in the present disclosure are a ROM code execution method, apparatus and an electronic device. The method includes: reading patch data from a first memory; parsing the patch data to obtain patch code data; acquiring, from the patch code data, a first address corresponding to at least one patch function, the first address indicating a location of the patch function in a target code stored in a second memory; and executing a first patch code of the patch function corresponding to the first address.

## Description

### TECHNICAL FIELD

The present disclosure relates to a field of computer technology, and in particular, to a ROM (Read Only Memory) code execution method, apparatus and an electronic device.

### BACKGROUND

A system on chip (SOC) integrates modules such as a central processing unit, a system control unit, a peripheral interface, and a human-machine interface onto a single chip. In an early stage of an SOC startup process, particularly during ROM code execution, it is needed to dynamically repair instruction errors and/or extended functions.

In prior technologies, contents in ROM patch are stored in a one-time programmable (OTP) memory or a system register. Due to very limited capacity of the OTP or the system register, less patch contents may be stored therein, resulting in a smaller amount of data that can be repaired, which cannot meet requirements for repair for errors in codes or functional extension in a larger-scale ROM.

### SUMMARY

A code in a ROM typically needs to store patch data in a constrained one-time programmable memory or system registers to repair errors. However, in prior technologies, capacity of a one-time programmable memory or a system register is extremely limited, resulting in a small amount of patch data that may be stored, which cannot support large-scale repair or complex functional extension for the code in the ROM.

To resolve the foregoing technical problem, the present disclosure provides a ROM code execution method, apparatus and an electronic device. By invoking a patch function reserved or existing in a ROM, functional repair and extension for a code in the ROM are achieved under limited storage capacity, significantly improving flexibility and functionality of a patch.

According to a first aspect of the present disclosure, provided is a ROM code execution method, including:
reading patch data from a first memory;
parsing the patch data to obtain patch code data;
acquiring, from the patch code data, a first address corresponding to at least one patch function, the first address indicating a location of the patch function in a target code stored in a second memory; and
executing a first patch code of the patch function corresponding to the first address.

According to a second aspect of the present disclosure, provided is a ROM code execution apparatus, including:
a patch data reading module, configured to read patch data from a first memory;
a patch data parsing module, configured to parse the patch data to obtain patch code data;
a first address acquiring module, configured to acquire, from the patch code data, a first address corresponding to at least one patch function, the first address indicating a location of the patch function in a target code stored in a second memory; and
a first patch code execution module, configured to execute a first patch code of the patch function corresponding to the first address.

According to a third aspect of the present disclosure, provided is an electronic device, including one or more processors and a memory in which computer program instructions are stored, where the computer program instructions, when executed by the processor, cause the processor to implement the ROM code execution method according to the first aspect.

According to a fourth aspect of the present disclosure, provided is a computer readable storage medium on which computer program instructions are stored, where the computer program instructions, when executed by a processor, cause the processor to implement the ROM code execution method according to the first aspect.

According to technical solutions of embodiments of the present disclosure, the patch code data is obtained by reading the patch data from the first memory and parsing the patch data. The first address corresponding to at least one patch function is acquired from the patch code data, where the first address indicates the location of the patch function in the target code in the second memory. It may be considered that according to the solutions of the embodiments of the present disclosure, a body of the first patch code is stored in the second memory, and the first memory needs to store only the first address corresponding to the patch function, rather than the first patch code of the patch function, greatly alleviating a capacity bottleneck of the first memory and avoids a problem of a smaller amount of data that can be repaired due to small capacity of the first memory. The first patch code of the patch function corresponding to the first address is executed, with directly jumping to the patch function solidified in the second memory when executing patch, without loading a large number of instructions from the first memory, accelerating an execution speed. Since the patch function in the target code of the second memory may be a pre-set functional repair function or a functional extension function, with a flexible design, the patch function is no longer limited to a simple instruction repair function, and may meet requirements for repair for or functional extension of a larger-scale target code.

### BRIEF DESCRIPTION OF THE DRAWINGS

FIG. 1 is a schematic diagram of a structure of a ROM code execution system according to an exemplary embodiment of the present disclosure;
FIG. 2 is a schematic flowchart of a ROM code execution method according to an exemplary embodiment of the present disclosure;
FIG. 3 is a schematic flowchart of a ROM code execution method according to another exemplary embodiment of the present disclosure;
FIG. 4 is a schematic flowchart of a ROM code execution method according to still another exemplary embodiment of the present disclosure;
FIG. 5 is a schematic flowchart of a patch data access method according to an exemplary embodiment of the present disclosure;
FIG. 6 is a schematic flowchart of a method for acquiring a first address according to an exemplary embodiment of the present disclosure;
FIG. 7 is a schematic flowchart of a ROM code execution method according to yet another exemplary embodiment of the present disclosure;
FIG. 8 is a schematic flowchart of a ROM code execution method according to still yet another exemplary embodiment of the present disclosure;
FIG. 9 is a schematic diagram of a structure of a ROM code execution apparatus according to an exemplary embodiment of the present disclosure; and
FIG. 10 is a schematic diagram of a structure of an electronic device according to an exemplary embodiment of the present disclosure.

### DETAILED DESCRIPTION OF THE EMBODIMENTS

To explain the present disclosure, exemplary embodiments of the present disclosure are described below in detail with reference to accompanying drawings. Clearly, the embodiments described are merely some, rather than all of embodiments of the present disclosure. It should be understood that the present disclosure is not limited to the exemplary embodiments.

It should be noted that, unless otherwise specified, the scope of the present disclosure is not limited by relative arrangement, numeric expressions, and numerical values of components and steps described in these embodiments.

### Application Overview

In the field of system on chip (SOC) startup and firmware technologies, late-stage repair and functional extension of a code in a ROM typically rely on a one-time programmable (OTP) memory or a system register to store patch data. Currently, a mainstream scheme for implementing repair for the code in the ROM is to store a to-be-repaired address and replacement data into the system register or the OTP, and data replacement is performed when execution by hardware logic proceeds to the corresponding address. However, limited by capacity of the OTP or the system register, this scheme may only support repair for a small amount of data, and cannot meet requirements of complex functional extension or large-scale code repair. As a result, functional flexibility and maintainability of a system are severely limited in early stages of startup.

Embodiments of the present disclosure provide a novel solution, which can resolve a problem of a smaller amount of data that can be repaired because less patch content can be stored in the OTP or the system register, not meeting requirements for code error repair or functional extension in a larger-scale ROM. Specifically, the embodiments of the present disclosure provide a ROM code execution method, apparatus and an electronic device. the method has key points of: reading patch data from a first memory; parsing the patch data to obtain patch code data; and acquiring, from the patch code data, a first address corresponding to at least one patch function, the first address indicating a location of the patch function in a target code in a ROM. It may be considered that, according to the solutions of the embodiments of the present disclosure, a body of a patch code is stored in the ROM, and the first memory needs to store only the first address corresponding to the patch function, which greatly alleviates a capacity bottleneck of the first memory. First patch code of the patch function corresponding to the first address is executed, with directly jumping to the patch function solidified in the ROM, without loading a large number of instructions from the first memory, accelerating an execution speed. Since the patch function is in the target code of the ROM, it may be a pre-set functional repair function or a functional extension function, and the patch function is no longer limited to a simple instruction repair function, and may meet requirements for repair for or functional extension of a larger-scale target code.

### Exemplary System

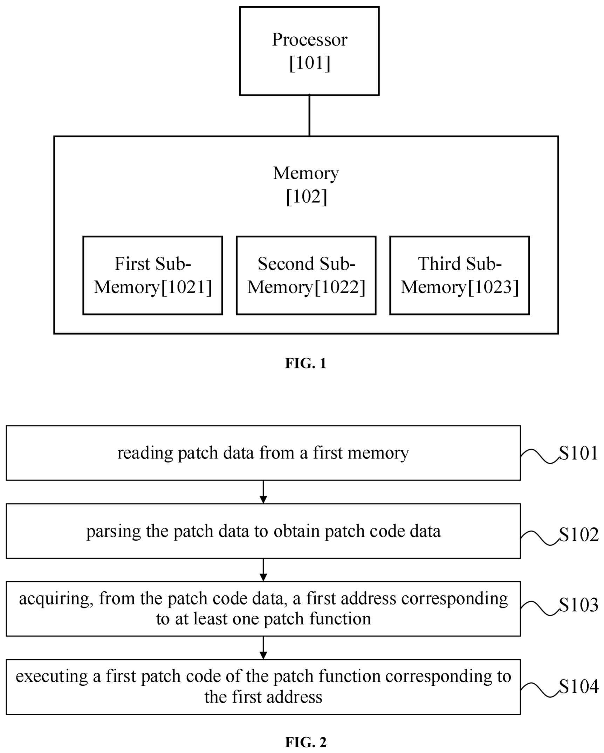

FIG. 1 is a block diagram of a structure of a ROM code execution system according to an exemplary embodiment of the present disclosure.

As shown in FIG. 1, in an exemplary embodiment, a ROM code execution system 10 may include a processor 101 and a memory 102. The memory 102 includes a first sub-memory 1021, a second sub-memory 1022, and a third sub-memory 1023.

In some implementations, the first sub-memory 1021 may be configured to store program instructions executable by the processor 101. The processor 101 may load and execute the program instructions in the first sub-memory 1021, such as executing a first patch code of a patch function corresponding to a first address. The second sub-memory 1022 may store patch data, and the third sub-memory 1023 may be configured to store a target code.

In some implementations, the processor 101 executes the program instructions in the first sub-memory 1021; reads patch data from the second sub-memory 1022; parses the patch data to obtain patch code data; and acquires, from the patch code data, a first address of at least one patch function, the first address indicating a location of the patch function in the target code stored in the third sub-memory 1023, and the first patch code of the patch function corresponding to the first address is executed by the processor 101.

In the ROM code execution system disclosed in this embodiment of the present disclosure, since the second sub-memory 1022 stores the first address corresponding to the patch function, rather than the patch function, a problem of a smaller amount of data that can be repaired due to small capacity of the second sub-memory 1022 may be avoided. Moreover, the patch function is stored in the third sub-memory 1023, and there is no limitation on a type of the patch function, where the patch function may be a functional repair function or a functional extension function, allowing flexible deployment when designing the target code. Therefore, requirements for repair for or functional extension of a larger-scale target code are met.

In some implementations, the first sub-memory 1021 may be a random access memory (RAM). Certainly, the RAM may include a dynamic random access memory (DRAM), a static random access memory (SRAM), and the like. The second sub-memory 1022 may be a one-time programmable (OTP) memory or a system register. The third sub-memory 1023 may be a read-only memory (ROM) or the like. Certainly, only exemplary description for the first sub-memory 1021, the second sub-memory 1022, and the third sub-memory 1023 is made in this embodiment of the present disclosure. Types of the sub-memories may be set according to an actual situation.

In some implementations, the processor may be a single-core processor or a multi-core processor; may include a general-purpose processor, such as a central processing unit (CPU) or a graphics processing unit (GPU); may further include an acceleration computing unit, such as a neural network processor (NPU); and may also be a dedicated processor, such as an ASIC or a FPGA.

### Exemplary Method

FIG. 2 is a schematic flowchart of a ROM code execution method according to an exemplary embodiment of the present disclosure. This embodiment may be applied to an electronic device. As shown in FIG. 2, the following steps are included.

Step S101: Reading patch data from a first memory.

The first memory may refer to a storage device storing patch data, including but not limited to a one-time programmable (OTP) memory and a system memory. The patch data may refer to a set of data used for repairing or extending a code in a ROM, including a patch code, a function address, and other information. For example, a data format of the patch data may be represented by using a binary code stream.

For example, the patch data includes patch metadata, address location information, code modification content, execution control information, and the like. The patch metadata includes, but is not limited to, version information of software (such as a target code) that requires patch repair, a patch ID or a flag bit used for determining whether the patch data includes a first address, creation time of the patch data, and a size of the patch data, and the like. The address location information includes, but is not limited to, the first address indicating a specific location of the patch function in the target code, and the like. The patch function and the first address are explained in the following content. The code modification content includes, but is not limited to, a patch instruction code and modification types indicating replacement, insertion, and deletion, and the like. The execution control information includes, but is not limited to, an execution sequence of a plurality of patch blocks, a dependency relationship indicating dependency information between patches, and the like. Certainly, the data format of the patch data and the information included in the patch data may be set according to an actual situation, which are not specifically limited herein.

By adopting the implementation of this step, the patch data stored in an external memory, that is, the first memory, is read for subsequent parsing and execution.

For example, during a startup process of a SOC system, the patch data is read from the OTP or the system register, to provide input for subsequent parsing and execution. For example, the patch data is read into the RAM for subsequent processing.

Step S102: Parsing the patch data to obtain patch code data.

Parsing refers to decoding and analyzing read raw patch data by a predefined data format and/or rule, to identify various components of the patch data. The patch code data may refer to structured information that is obtained by parsing the patch data and may be used directly. It should be understood that data in the patch data and data in the patch code data are identical, with only data formats differing. The patch data may refer to an unstructured binary code stream, while the patch code data may be structured data obtained by parsing the patch data.

For example, a parsing manner may be parsing based on a length, where when the patch data is set, some fields have a fixed length, and reading is performed by a fixed number of bytes during parsing; may also be parsing based on a delimiter, where the patch data marks a boundary of a field by a particular delimiter, and accordingly structured patch code data may be obtained based on the delimiter when parsing; and may also be fixed-format parsing based on an offset, where a start offset and a length of each field in the patch data are specified, data with a specified length is directly read from a designated offset location when parsing. The solution of this embodiment of the present disclosure does not impose any limitations on the parsing manner, which may be set according to an actual situation.

Since the binary code stream is a continuous byte sequence without structural information, structured patch code data may be obtained by a pre-set data format and/or by dividing the continuous byte sequence into meaningful fields, thereby facilitating acquiring of information such as the first address in the patch code data.

Step S103: Acquiring, from the patch code data, a first address corresponding to at least one patch function.

The first address indicates a location of the patch function in a target code stored in a second memory. The patch function may refer to a functional function reserved or existing in the second memory. The first address corresponding to the patch function is a memory address, indicating an address of the functional function in the target code. In other words, an interface for a functional function is reserved in the target code of the second memory. For example, the first address is an address where the patch function starts. The patch function, predefined during design of the target code, is a part of the target code. The target code refers to a raw code stored in the second memory. The second memory may refer to a ROM for storing the target code.

For example, according to the technical solutions of this embodiment of the present disclosure, not only functional repair for the target code may be implemented, but also functional extension of the target code may be implemented. Specifically, if the patch function pre-written in the target code serves to perform functional repair, the functional repair is performed for the target code by invoking the patch function during a patching operation for the target code. If the patch function pre-written in the target code serves to perform functional extension, the patch function functional extension may be performed for the target code by invoking when performing the patching operation for the target code.

By adopting the implementation of this step, after the patch data is parsed, a field of a first address corresponding to the patch function is extracted from the patch code data, so that the patch function may be dynamically invoked based on the first address when performing the patching operation for the target code, thereby implementing repair for or functional extension of the target code. Through address reference, it is avoided that a large amount of patch codes are stored in the first memory, and a bottleneck of limited capacity of the first memory is alleviated by utilizing an existing code in the second memory. In this case, by fully utilizing space of the second memory to store the patch function, storage pressure on the first memory is reduced, which may implement large-scale code repair and complex functional extension.

Step S104: Executing a first patch code of the patch function corresponding to the first address.

The first patch code refers to an actual executable code of the patch function in the second memory, and is used for performing a specific repair or extension operation, such as modifying a register value, replacing a defective algorithm or instruction sequence, repairing a logical error in an initialization process, performing hardware reconfiguration or initialization, performing system status query and modification, and invoking other functions or modules.

According to the implementation of this step, by using the acquired first address corresponding to the patch function, jumping to a corresponding location in the target code in the second memory, so as to run the patch function. To be specific, the first patch code in the patch function is executed to complete error repair for or functional extension of the target code, thereby enabling a patch mechanism to take effect. Since the patch function is predefined in the second memory, reliability and security of the code are ensured.

According to technical solutions of this embodiment of the present disclosure, the patch code data is obtained by reading the patch data from the first memory and parsing the patch data. The first address corresponding to at least one patch function is acquired from the patch code data, the first address indicating the location of the patch function in the target code in the second memory. It may be considered that, according to the solutions of this embodiment of the present disclosure, a body of the patch code is stored in the second memory, and the first memory needs to store only the first address corresponding to the patch function, rather than the patch function, greatly alleviating a capacity bottleneck of the first memory and avoiding a problem of a smaller amount of data that can be repaired due to small capacity of the first memory. Moreover, the patch function in the target code of the second memory may be a pre-set functional repair function or a functional extension function, with a flexible design. The patch function is no longer limited to a simple instruction repair function, meeting requirements for repair for or functional extension of a larger-scale target code. The first patch code of the patch function corresponding to the first address is executed, with directly jumping to the patch function solidified in the second memory when executing patch, without loading a large number of instructions from the first memory, accelerating an execution speed.

In an optional implementation, before the patch data is obtained, a patch function, including but not limited to a functional repair function and a functional extension function, is designed in the target code based on a situation of the target code. The first address corresponding to the patch function is written into the patch code data, so as to facilitate invocation of the existing functional repair function or functional extension function when the patching operation is performed by the target code.

In an optional implementation, through a patch processing framework (such as a patch repair function), a first address is received to serve as a parameter, and a patch function corresponding to the first address may be invoked.

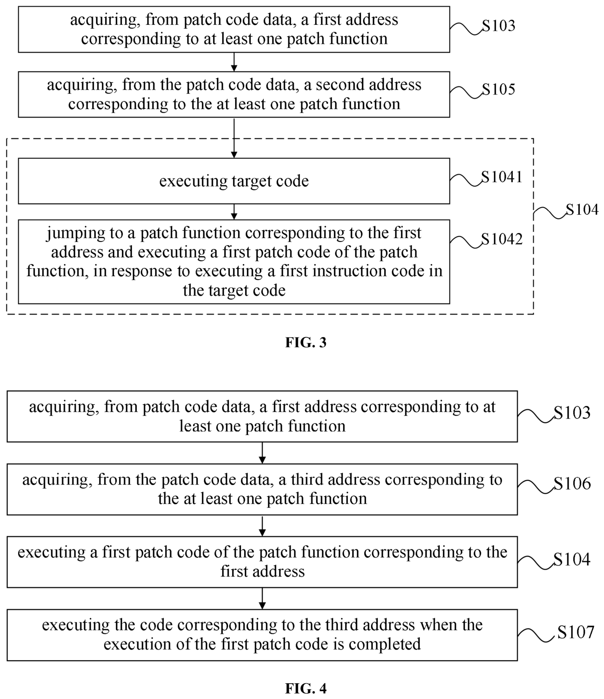

FIG. 3 is a schematic flowchart of a ROM code execution method according to another exemplary embodiment of the present disclosure.

As shown in FIG. 3, in an implementation, after step S103, the method further includes the following steps.

Step S105: Acquiring, from the patch code data, a second address corresponding to the at least one patch function.

The patch code data further includes the second address indicating a location of the first instruction code in the target code. The second address may be a memory address, and the first instruction code is used for triggering execution of the first patch code of the patch function. The first instruction code may be one or more instructions in the target code, such as a jump instruction or a function invoking instruction. When these instructions are executed, a jump to an address where the patch function is located is triggered. In other words, the first instruction code may refer to a hook point for interrupting a normal flow and executing the first patch code.

According to the implementation of this step, a specific location requiring patch intervention in the target code is determined; and a location in the target code where the patch function needs to be triggered may be accurately found by acquiring the second address, thereby implementing precise interception during the execution of the target code.

On the basis of step S105 described above, step S104 includes the following steps.

Step S1041: Executing the target code.

By adopting the implementation of this step, instructions in the target code are read and executed sequentially, thereby ensuring that the target code may run normally before intervention of the patch mechanism. This step serves as foundation for patch triggering.

Step S1042: jumping to the patch function corresponding to the first address and executing the first patch code of the patch function, in response to executing the first instruction code in the target code.

In the implementation of this step, when the first instruction code is executed, the jump event is detected by hardware or software detects to trigger a jump action, so as to dynamically jump to the patch function corresponding to the first address to execute the first patch code, thereby performing functional extension or code repair for the target code. Seamless integration of a patch triggering mechanism does not affect a normal code execution flow.

For example, in a ROM of an integrated cockpit-driving system SOC, there is a target code responsible for initializing an LED light, where a patch function is reserved in the target code, for setting brightness of the LED light.

Below are some of addresses of the target code in the ROM and functional explanations of codes corresponding to these addresses.

A code at an address 0X7FFC is used for configuring an LED port; a code at an address 0X7FFE is used for setting an LED mode; a code at an address 0X8000 includes the first instruction code/ is used for setting a brightness value of the LED to 10, such as set_led_brightness(10); and a code at an address 0X8002 is used for other initialization codes. When no patching operation is performed by the target code, the code at the address 0X8000 sets the brightness value of the light to 10; and when a patching operation is performed, the code at the address 0X8000 serves as the first instruction code.

For example, for the patch function reserved in the target code:

```
 Address 0X9000: set_led_brightness_patch() {
 // first patch code starts
 set_led_brightness (255); // repair: use a correct brightness value 255
 // first patch code ends
 return; // after returning, proceed to
execute an instruction at 0X8002 in the target code
 }
 
```

0X8000 is set as the second address, and 0X9000 is set as the first address.

For executing the target code, when the execution proceeds to 0X8000, the first instruction code is executed to jump to a patch function at 0X9000 to execute the first patch code of the patch function, the LED being set to high brightness and the execution of the patch function being completed, returning and proceeding to execute codes at 0X8002 and onwards.

In this embodiment of the present disclosure, by acquiring the second address, a location requiring patch intervention is precisely located, so that the patch function is triggered only when the execution of the target code proceeds to the second address. This avoids unnecessary jumps, improving precision and efficiency of patch execution. The patch mechanism seamlessly integrates with the normal execution flow of the target code. When the execution of the target code proceeds to the first instruction code, automatically jumping to the patch function to execute the first patch code. After the execution is completed, returning to an original flow, thereby ensuring that logical integrity of an original code is not interrupted or disrupted by the patch intervention.

FIG. 4 is a schematic flowchart of a ROM code execution method according to still another exemplary embodiment of the present disclosure.

As shown in FIG. 4, in an implementation, after step S103, the method further includes:

Step S106: Acquiring, from the patch code data, a third address corresponding to the at least one patch function.

The third address indicates a location of a code to proceed to be executed in the target code when the execution of the first patch code of the patch function is completed. For example, the third address is a memory address that explicitly indicates a location, in the target code, that needs to be returned to continue execution after the execution of the first patch code of the patch function is completed. For example, during parsing of the patch data, the third address is read from a specific field by a predefined data format.

A return path is established according to the implementation of this step. Before jumping to execute the patch function, an address to return to after the execution is completed is predetermined, thereby ensuring that the intervention of the patch would not cause a program error, ensuring that an execution flow of the raw target code may still remain logical integrity and correctness after the patch intervention.

For example, regarding the foregoing examples, the first address, the second address, and the third address are set for the target code and the patch function for initializing the LED light.

First address: 0X9000, indicating an address of the patch function; Second address: 0X8000, indicating an address of the jump instruction; Third address: 0X8002, indicating an address of a code to proceed to be executed after the execution of the patch function is completed.

For executing the target code, when the execution proceeds to 0X8000, jumping to a patch function at 0X9000 to execute the first patch code of the patch function, the LED being set to high brightness, and after the execution of the patch function being completed, returning and proceeding to execute codes at 0X8002 and onwards.

Certainly, the third address is not necessarily an instruction immediately next to a trigger point (the second address). The third address may jump to other locations in the target code based on repair logic, for example, may skip a segment of defective code that is no longer required to be executed.

For example, the second address: 0X8000, the first address: 0X9000, and the third address: 0X800C; the LED brightness is correctly set by the patch function; and after the execution of the first patch code of the patch function is completed, not returning to a next instruction at 0X8000, but directly jumping to a code at the third address 0X800C, so as to continue the execution.

After step S104, the method further includes:
Step S107: Executing a code corresponding to the third address when the execution of the first patch code is completed.

According to the implementation of this step, when all instructions in the patch function have been executed, returning to the code at the third address in the target code and proceeding to execute of the code in the target code, with jumping to the third address to proceed to execute the code at the third address.

For example, end may be represented by one instruction used in the patch function, which may be a return instruction, a jump instruction, or the like.

In this embodiment of the present disclosure, by introducing and standardizing a return address mechanism, invoking and returning procedures for patches are standardized and structured, so that an entire patch execution flow forms a complete and controllable process. Since it may be specified to return to any location in the target code, the patch may implement more complex repair strategies, such as skipping a defective code segment. By explicitly specifying a location to return to, the code in the target code may continue to be executed after the patch execution, avoiding unknown risks.

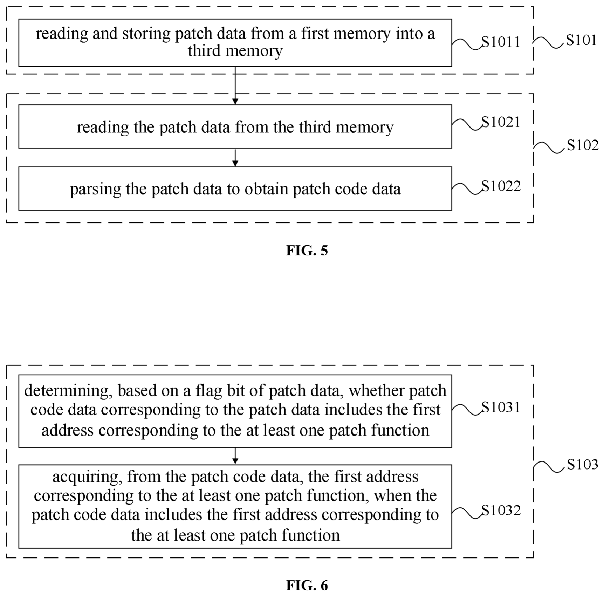

FIG. 5 is a schematic flowchart of a patch data access method according to an exemplary embodiment of the present disclosure.

As shown in FIG. 5, in an implementation, step S101 includes:
Step S1011: Reading and storing the patch data from the first memory into a third memory.

The third memory is configured to temporarily store the patch data. The third memory includes but is not limited to a RAM, which may include an SRAM, a DRAM, and the like. The third memory has a fast access speed, is readable and writable, and supports random access.

According to the implementation of this step, the patch data is transferred from a storage location in the first memory to a temporary operating area that is high-speed, flexible, and easy to operate, in preparation for subsequent frequent and rapid parsing operations.

On the basis of step S1011, step S102 includes the following steps.

Step S1021: Reading the patch data from the third memory.

Step S1022: Parsing the patch data to obtain the patch code data.

In this implementation, the patch data is read directly from a specified address in the third memory, and data in the RAM is analyzed byte by byte or field by field according to a preset format or rule, to obtain the patch code data. In a high-speed memory, raw patch data is efficiently and reliably translated into executable instructions and referenceable addresses.

In this embodiment of the present disclosure, the patch data in the first memory is stored into the third memory that is high-speed, flexible, and easy to operate, so that the patch data is read from the third memory for data parsing. Parsing and application speeds of the patch data are no longer limited by read performance of the first memory, which improves efficiency of reading and parsing the patch data.

FIG. 6 is a schematic flowchart of a method for acquiring a first address according to an exemplary embodiment of the present disclosure.

As shown in FIG. 6, in an implementation, step S103 may include the following steps.

Step S1031: Determining, based on a flag bit of the patch data, whether the patch code data corresponding to the patch data includes the first address corresponding to the at least one patch function.

The flag bit may refer to one or more specific binary bits, being embedded in a preset fixed location of the patch data to serve as a signal or switch. A value of the flag bit explicitly indicates a type of the current patch data or a content feature contained in the current patch data. A specific value and a representation form of the flag bit are not limited in this application. For example, the representation form of the flag bit may be a form of a numeric, an English letter, or a combination of an English letter and a numeric. For example, the flag bit is represented in a form of a numeric. When the flag bit is 0, it indicates that the patch data is of a conventional type that is, containing only a direct patch instruction code (the second patch code in the following embodiments), without involving invocation of a preset patch function in the second memory. If the flag bit is 1, it indicates that the patch data is of a novel function invoking type, that is, the patch code data corresponding to the patch data includes a first address corresponding to at least one patch function. If the flag bit is 2, it indicates that the patch data is of a composite type, that is, the patch code data corresponding to the patch data includes both a first address corresponding to at least one patch function and at least one patch instruction code.

In the implementation of this step, when parsing the patch data, the predefined flag bit is first located and read. Meaning of the flag bit may be parsed through simple condition determining. For example, it is determined whether the flag bit is 1. If the flag bit is 1, it indicates that the patch code data includes the first address corresponding to at least one patch function. A subsequent processing flow is determined by determining the flag bit in advance.

For example, step S1032 may be performed if it is determined through the determining of the flag bit that the patch code data corresponding to the patch data includes the first address.

Step S1032: acquiring, from the patch code data, the first address corresponding to the at least one patch function, when the patch code data includes the first address corresponding to the at least one patch function.

In the implementation of this step, an operation of extracting the first address from the patch code data is performed only when the determining of the flag bit passes.

For example, if it is determined through the determining of the flag bit that the patch code data corresponding to the patch data does not include the first address but includes a patch instruction code, the patch instruction code may be retrieved.

In this embodiment of the present disclosure, by introducing the flag bit determining mechanism, different processing flows are adopted according to different patch types, so that various expected patch formats may be processed safely and correctly, thereby avoiding runtime errors caused by a mismatch data format.

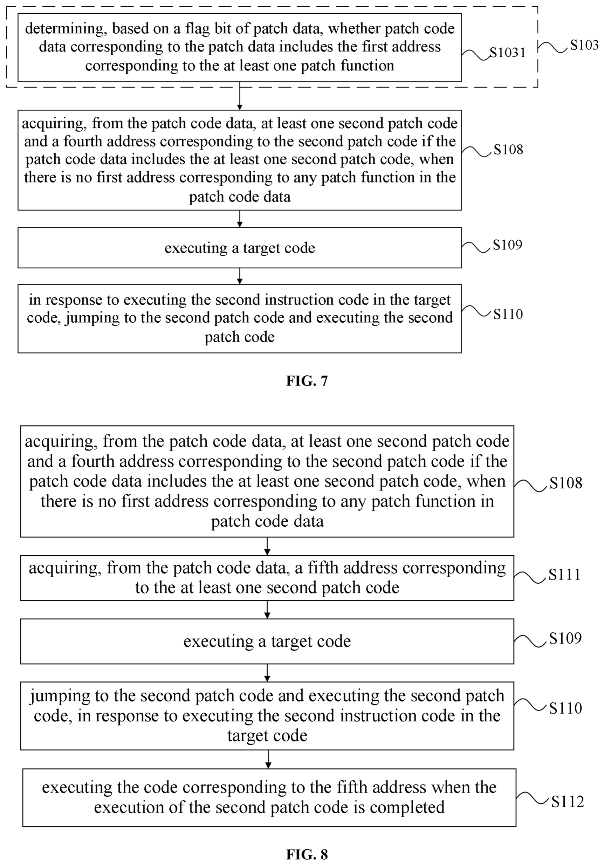

FIG. 7 is a schematic flowchart of a ROM code execution method according to yet another exemplary embodiment of the present disclosure.

As shown in FIG. 7, in an implementation, after step S1031, the method further includes the following steps.

Step S108: acquiring, from the patch code data, at least one second patch code and a fourth address corresponding to the second patch code if the patch code data includes the at least one second patch code, when there is no first address corresponding to any patch function in the patch code data.

The second patch code may refer to a to-be-executed binary instruction sequence that is directly stored in the patch data, such as a patch instruction code. Different from the first patch code, the second patch code is a part of the patch data, and is used for directly replacing, overwriting, or modifying an original instruction in the target code. The fourth address indicates a location of a second instruction code in the target code, and the second instruction code is used for triggering execution of the second patch code. The fourth address may refer to a memory address. For a detailed explanation of the fourth address, reference may be made to the explanation of the second address, and details are not described herein. The second instruction code refers to an original defective or replacement-required instruction that is stored in the target code and is located at the fourth address. For an explanation of the second instruction code, reference may be made to that of the first instruction code, and details are not described herein.

In the implementation of this step, by parsing the flag bit, it is determined that patch code data corresponding to the current patch data includes at least one second patch code. The second patch code and the fourth address corresponding to the second patch code are acquired from the patch code data, for subsequent use in performing patch repair or patch extension on the target code.

In an example, when there is no first address corresponding to any patch function in the patch code data, it may be determined, by the flag bit, whether the patch code data includes at least one second patch code. For example, if the flag bit is 0, it indicates that the patch code data includes at least one second patch code. If the flag bit is 1, it indicates that the patch code data includes the first address corresponding to at least one patch function. In this way, when it is determined that the flag bit is not 1, it indicates that the patch code data does not include the first address corresponding to the patch function. In this case, it is needed to determine whether the patch code data includes at least one second patch code, for example, determine whether the flag bit is 0. When it is determined that the flag bit is 0, it indicates that the patch code data includes at least one second patch code.

In another example, if the flag bit is A, it indicates that the patch code data includes only the second patch code, that is, the patch code data includes at least one second patch code. If the flag bit is B, it indicates that the patch code data includes only the first address, that is, the patch code data includes the first address corresponding to at least one patch function. If the flag bit is C, it indicates that the patch code data includes both the second patch code and the first address, that is, the patch code data corresponding to the patch data includes both the first address corresponding to at least one patch function and at least one patch instruction code. In this way, when it is determined that the flag bit is A, it indicates that the patch code data does not include the first address corresponding to any patch function. In this case, it may be determined that the patch code data includes at least one second patch code.

Certainly, in this example, when it is determined that the flag bit is C, the patch code data includes both the second patch code and the first address corresponding to the patch function. In this case, the first address corresponding to the patch function and the second patch code may be acquired. Moreover, according to an execution sequence of the patch function and the second patch code, patching operations for the target code are performed sequentially.

Certainly, this is merely one of manners for determining whether the patch code data includes the second patch code. The manner for determining whether the patch code data includes the second patch code is not limited in the technical solutions in this embodiment of the present disclosure.

Step S109: Executing the target code.

Step S110: jumping to the second patch code and executing the second patch code, in response to executing the second instruction code in the target code.

In the implementation of the present disclosure, the target code in the second memory is executed normally. When execution proceeds to the fourth address, if it is detected, by the hardware or the software, that the fourth address has been registered as requiring a patch, a jump is triggered, so that the original instruction at the fourth address in the second memory is not executed; instead, the second patch code is executed. A defective instruction in the target code is skipped, and rapid repair for the target code is implemented by executing the second patch code.

In this embodiment of the present disclosure, when there is at least one second patch code in the patch code data, the second patch code and the fourth address corresponding to the second patch code are acquired. When the execution of the target code proceeds to the fourth address, the second instruction code is executed, thereby jumping to the second patch code, achieving an effect of quickly repairing the target code by executing the second patch code.

FIG. 8 is a schematic flowchart of a ROM code execution method according to still yet another exemplary embodiment of the present disclosure.

As shown in FIG. 8, in an implementation, after step S108, the method further includes:

Step S111: Acquiring, from the patch code data, a fifth address corresponding to the at least one second patch code.

The fifth address indicates a location of a code to proceed to be executed in the target code when the execution of the second patch code is completed.

In the implementation of this step, the fifth address corresponding to the at least one second patch code is acquired from the patch code data, and a clear return path is established for the second patch code. Before jumping to execute the second patch code, a location in the target code to return to after the execution is completed is predetermined, maintaining logical integrity of a program.

After step S110, the method further includes:

Step S112: Executing the code corresponding to the fifth address when the execution of the second patch code is completed.

In the implementation of this step, the code corresponding to the fifth address is executed after the execution of the second patch code is completed. Patch repair becomes more flexible since any return address may be specified according to requirements. For example, a segment of defective code in the second memory may be skipped, and a location after the segment of defective code is directly returned to after the execution of the second patch code is completed, thereby implementing more complex repair logic.

For example, for the foregoing examples, there is the target code responsible for initializing the LED light. A patch function is reserved in the target code, to set the brightness of the LED light.

Below are some addresses of the target code in the ROM and functional explanations of codes corresponding to these addresses.

A code at an address 0X7FFC is used for configuring an LED port; a code at an address 0X7FFE is used for setting an LED mode; a code at an address 0X8000 includes the first instruction code/ is used for setting a brightness value of the LED to 10, such as set_led_brightness(10); and a code at an address 0X8002 is used for other initialization codes. When no patching operation is performed by the target code, the code at the address 0X8000 sets the brightness value of the light to 10. When a patching operation is performed, the code at the address 0X8000 serves as the second instruction code.

The second patch code is set to set_led_brightness(255), that is, the brightness value of the LED is adjusted to 255. Fourth address: 0X8000, indicating an address of the second instruction code; Fifth address: 0X8002, indicating an address of the code to proceed to be executed after the execution of the second patch code is completed.

For executing the target code sequentially, when the execution proceeds to an instruction at 0X8000, jumping to the second patch code in either the first memory or the third memory to execute the second patch code., the LED being set to be brightest and the execution of the second patch code being completed, and returning and proceeding to execute codes at 0X8002 and onwards.

Certainly, the fifth address is not necessarily an instruction immediately next to a trigger point (the fourth address). The fifth address may jump to other locations in the target code based on the repair logic, for example, may skip a segment of defective code that is no longer required to be executed.

For example, the fourth address: 0X8000 and the fifth address: 0X800C; the LED brightness is correctly set through the patch function; and after the execution of the second patch code is completed, not returning to a next instruction at 0X8000, but directly jumping to a code at the fifth address 0X800C, so as to continue the execution.

In the embodiments of the present disclosure, by introducing a standard and configurable return management scheme, the potion to return after the execution of the second patch code is completed is dynamically controlled according to an actual situation, thereby implementing relatively complex repairs such as code segment skipping and process redirection. By explicitly specifying the return address based on a direction of data configuration, system instability caused by a return address error is fundamentally eliminated.

The solutions involved in the present disclosure are not limited to the embodiments described above.

### Exemplary Apparatus

The ROM code execution method provided in the embodiments of the present disclosure is described above. It may be understood that, in order to implement functions of the ROM code execution method, a ROM code execution apparatus may include corresponding hardware and software for implementing hardware functions.

A person skilled in the art should easily conceive that, in combination with the steps of the ROM code execution method described in the embodiments of the present disclosure, the embodiments of the present disclosure may be implemented in a form of hardware or a combination of software-driven hardware. Whether a certain function is implemented in a form of hardware or software-driven hardware depends on specific application and design constraints of the technical solutions. A person skilled in the art may use different methods to implement the described functions for each specific application, but such implementation should not be considered beyond the scope of the present disclosure.

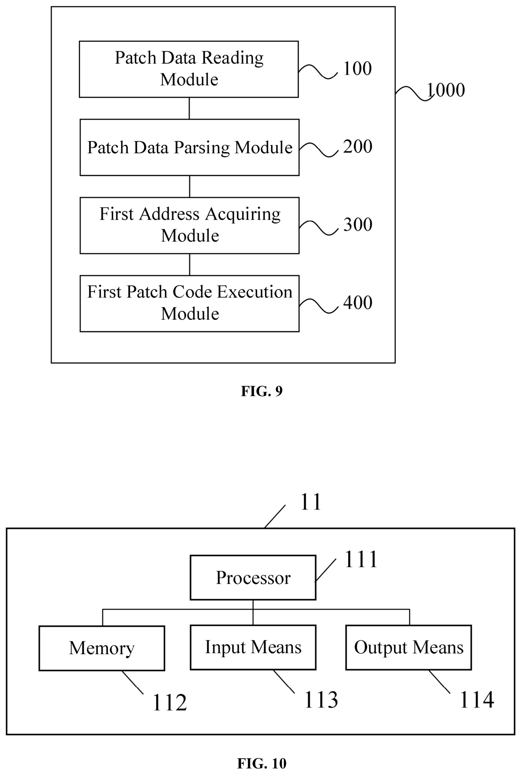

FIG. 9 is a schematic diagram of a structure of a ROM code execution apparatus according to an exemplary embodiment of the present disclosure.

As shown in FIG. 9, in an embodiment, a ROM code execution apparatus 1000 includes:
a patch data reading module 100, configured to read patch data from a first memory;
a patch data parsing module 200, configured to parse the patch data to obtain patch code data;
a first address acquiring module 300, configured to acquire, from the patch code data, a first address corresponding to at least one patch function, the first address indicating a location of the patch function in a target code stored in a second memory; and
a first patch code execution module 400, configured to execute a first patch code of the patch function corresponding to the first address.

According to technical solutions of this embodiment of the present disclosure, the patch data reading module 100 reads the patch data from the first memory, and the patch data parsing module 200 parses the patch data to obtain the patch code data. The first address acquiring module 300 acquires, from the patch code data, the first address corresponding to at least one patch function, where the first address indicates the location of the patch function in the target code in the second memory. It may be considered that, according to the solutions of this embodiment of the present disclosure, a body of the patch code is stored in the second memory, and the first memory needs to store only the first address corresponding to the patch function, rather than the patch function, greatly alleviating a capacity bottleneck of the first memory and avoids a problem of a smaller amount of data that can be repaired due to small capacity of the first memory. Moreover, the patch function in the target code of the second memory may be a pre-set functional repair function or a functional extension function, with a flexible design. The patch function is no longer limited to a simple instruction repair function, meeting requirements for repair for or functional extension of a larger-scale target code. The first patch code execution module 400 executes the first patch code of the patch function corresponding to the first address, with directly jumping to the patch function solidified in the second memory when executing patch, without loading a large number of instructions from the first memory, accelerating an execution speed.

In an implementation, the ROM code execution apparatus 1000 further includes:
a second address acquiring module, configured to acquire, from the patch code data, a second address corresponding to the at least one patch function, where the second address indicates a location of a first instruction code, for triggering execution of the first patch code of the patch function, in the target code.

The first patch code execution module 400 is further configured to: execute the target code; and jump to a patch function corresponding to the first address and execute a first patch code of the patch function, in response to executing the first instruction code in the target code.

In an implementation, the ROM code execution apparatus 1000 further includes:
a third address acquiring module, configured to acquire, from the patch code data, a third address corresponding to the at least one patch function, where the third address indicates a location of a code to proceed to be executed in the target code when the execution of the first patch code of the patch function is completed.

The first patch code execution module 400 is further configured to: execute a code corresponding to the third address when the execution of the first patch code is completed.

In an implementation, the patch data reading module 100 is further configured to: read and store the patch data from the first memory into a third memory, where the third memory is configured to temporarily store the patch data.

The patch data parsing module 200 is further configured to: read the patch data from the third memory; and parse the patch data to obtain the patch code data.

In an implementation, the first address acquiring module 300 is further configured to: determine, based on a flag bit of the patch data, whether the patch code data corresponding to the patch data includes the first address corresponding to the at least one patch function; and acquire, from the patch code data, the first address corresponding to the at least one patch function when the patch code data includes the first address corresponding to the at least one patch function.

In an implementation, the ROM code execution apparatus 1000 for a read-only memory further includes:
a second patch code acquiring module, configured to: acquire, from the patch code data, at least one second patch code and a fourth address corresponding to the second patch code if the patch code data includes at least one second patch code, when there is no first address corresponding to any patch function in the patch code data, where the fourth address indicates a location of a second instruction code, for triggering execution of the second patch code, in the target code;
a first code execution module, configured to execute the target code; and
a second patch code execution module, configured to: jump to the second patch code and execute the second patch code, in response to executing the second instruction code in the target code.

In an implementation, the ROM code execution apparatus 1000 further includes:
an address acquiring module, configured to acquire, from the patch code data, a fifth address corresponding to the at least one second patch code, where the fifth address indicates a location of a code to proceed to be executed in the target code when the execution of the second patch code is completed; and
a second code execution module, configured to execute a code corresponding to the fifth address when the execution of the second patch code is completed.

### Exemplary Electronic Device

FIG. 10 is a diagram of a structure of an electronic device according to an embodiment of the present disclosure. The electronic device 11 includes at least one processor 111 and a memory 112.

The processor 111 may be a central processing unit (CPU) or another form of processing unit having a data processing capability and/or an instruction execution capability, and may control other components in the electronic device 11 to implement desired functions.

The memory 112 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 111 may execute the one or more program instructions to implement the ROM code execution method according to various embodiments of the present disclosure that are described above and/or other desired functions.

In an example, the electronic device 11 may further include an input means 113 and an output means 114. These components are connected to each other through a bus system and/or another form of connection mechanism (not shown).

The input means 113 may further include, for example, a keyboard and a mouse.

The output means 114 may output various information to the outside, and may include, for example, a display, a loudspeaker, a printer, a communication network, and a remote output means connected to the communication network.

Certainly, for simplicity, FIG. 10 shows only some of components in the electronic device 11 that are related to the present disclosure, and components such as a bus and an input/output interface are omitted. In addition, according to specific application situations, the electronic device 11 may further include any other appropriate components.

### Exemplary Computer Program Product And Computer Readable Storage Medium

In addition to the foregoing method and apparatus, embodiments of the present disclosure may also provide a computer program product including computer program instructions, where the computer program instructions, when executed by a processor, cause the processor to implement the steps of the ROM code execution method according to the embodiments of the present disclosure, that are described in the "Exemplary Method" section described above.

The computer program product may be program code, written with one or any combination of a plurality of programming languages, which is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored, where the computer program instructions, when executed by the processor, cause the processor to perform the steps of the ROM code execution method according to the embodiments of the present disclosure, that are described in the "Exemplary Method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of the present disclosure are described above in combination with specific embodiments. However, advantages, superiorities, and effects mentioned in the present disclosure are merely examples but are not for limitation, and it cannot be considered that these advantages, superiorities, and effects are necessary for the embodiments of the present disclosure. In addition, specific details described above are merely for examples and for ease of understanding, rather than limitations. The details described above do not limit that the present disclosure must be implemented by using the foregoing specific details.

A person skilled in the art may make various modifications and variations to the present disclosure without departing from the spirit and the scope of this application. In this way, if these modifications and variations of this application fall within the scope of the claims and equivalent technologies of the claims of the present disclosure, the present disclosure also intends to include these modifications and variations.

## Claims

1. A ROM code execution method, **characterized by** comprising:
reading (S101) patch data from a first memory;
parsing (S102) the patch data to obtain patch code data;
acquiring (S103), from the patch code data, a first address corresponding to at least one patch function, the first address indicating a location of a patch function in a target code stored in a second memory; and
executing (S104) a first patch code of the patch function corresponding to the first address.

2. The ROM code execution method according to claim 1, wherein after the acquiring (S103), from the patch code data, a first address corresponding to at least one patch function, the method further comprises:
acquiring (S105), from the patch code data, a second address corresponding to the at least one patch function, the second address indicating a location of a first instruction code, for triggering execution of the first patch code of the patch function, in the target code; and
the executing (S104) a first patch code of the patch function corresponding to the first address comprises:
executing (S1041) the target code; and
jumping to the patch function corresponding to the first address and executing (S1042) the first patch code of the patch function, in response to executing the first instruction code in the target code.

3. The ROM code execution method according to claim 1, wherein after the acquiring (S103), from the patch code data, a first address corresponding to at least one patch function, the method further comprises:
acquiring (S106), from the patch code data, a third address corresponding to the at least one patch function, the third address indicating a location of a code to proceed to be executed in the target code when the execution of the first patch code of the patch function is completed; and
after the executing (S104) a first patch code of the patch function corresponding to the first address, the method further comprises:
executing (S107) a code corresponding to the third address when the execution of the first patch code is completed.

4. The ROM code execution method according to claim 1, wherein the reading (S101) patch data from a first memory comprises:
reading and storing (S1011) the patch data from the first memory into a third memory, wherein the third memory is configured to temporarily store the patch data; and
the parsing (S102) the patch data to obtain patch code data comprises:
reading (S1021) the patch data from the third memory; and
parsing (S1022) the patch data to obtain the patch code data.

5. The ROM code execution method according to claim 1, wherein the acquiring (S103), from the patch code data, a first address corresponding to at least one patch function comprises:
determining (S1031), based on a flag bit of the patch data, whether the patch code data corresponding to the patch data comprises the first address corresponding to the at least one patch function; and
acquiring (S1032), from the patch code data, the first address corresponding to the at least one patch function, when the patch code data comprises the first address corresponding to the at least one patch function.

6. The ROM code execution method according to claim 5, wherein after the determining (S1031), based on a flag bit of the patch data, whether the patch code data corresponding to the patch data comprises the first address corresponding to the at least one patch function, the method further comprises:
acquiring (S108), from the patch code data, at least one second patch code and a fourth address corresponding to the second patch code if the patch code data comprises the at least one second patch code, when there is no first address corresponding to any patch function in the patch code data, the fourth address indicating a location of a second instruction code, for triggering execution of the second patch code, in the target code;
executing (S1041) the target code; and
jumping to the second patch code and executing (S110) the second patch code, in response to executing the second instruction code in the target code.

7. The ROM code execution method according to claim 6, wherein after the acquiring (S108), from the patch code data, at least one second patch code and a fourth address corresponding to the second patch code, the method further comprises:
acquiring (S111), from the patch code data, a fifth address corresponding to the at least one second patch code, the fifth address indicating a location of a code to proceed to be executed in the target code when the execution of the second patch code is completed; and
after the executing (S110) the second patch code, the method further comprises:
executing (S112) the code corresponding to the fifth address when the execution of the second patch code is completed.

8. A ROM code execution apparatus, **characterized by** comprising:
a patch data reading module (100), configured to read patch data from a first memory;
a patch data parsing module (200), configured to parse the patch data to obtain patch code data;
a first address acquiring module (300), configured to acquire, from the patch code data, a first address corresponding to at least one patch function, the first address indicating a location of the patch function in a target code stored in a second memory; and
a first patch code execution module (400), configured to execute a first patch code of the patch function corresponding to the first address.

9. The ROM code execution apparatus according to claim 8, further comprising:
a second address acquiring module, configured to acquire, from the patch code data, a second address corresponding to the at least one patch function, the second address indicating a location of a first instruction code, for triggering execution of the first patch code of the patch function, in the target code,
wherein the first patch code execution module (400) is further configured to comprises:
execute the target code; and
jump to the patch function corresponding to the first address, and executing the first patch code of the patch function, in response to executing the first instruction code in the target code.

10. The ROM code execution apparatus according to claim 8, further comprising:
a third address acquiring module, configured to acquire, from the patch code data, a third address corresponding to the at least one patch function, the third address indicating a location of a code to proceed to be executed in the target code when the execution of the first patch code of the patch function is completed,
wherein the first patch code execution module (400) is further configured to:
execute a code corresponding to the third address when the execution of the first patch code is completed.

11. The ROM code execution apparatus according to claim 8, wherein the patch data reading module (100) is further configured to:
read and store the patch data from the first memory into a third memory, wherein the third memory is configured to temporarily store the patch data; and
the patch data parsing module (200) is further configured to:
read the patch data from the third memory; and
parse the patch data to obtain the patch code data.

12. The ROM code execution apparatus according to claim 8, wherein the first address acquiring module (300) is further configured to:
determine, based on a flag bit of the patch data, whether the patch code data corresponding to the patch data comprises the first address corresponding to the at least one patch function; and
acquire, from the patch code data, the first address corresponding to the at least one patch function, when the patch code data comprises the first address corresponding to the at least one patch function.

13. The ROM code execution apparatus according to claim 12, further comprising:
a second patch code acquiring module, configured to: acquire, from the patch code data, at least one second patch code and a fourth address corresponding to the second patch code if the patch code data comprises the at least one second patch code, when there is no first address corresponding to any patch function in the patch code data, the fourth address indicating a location of a second instruction code, for triggering execution of the second patch code, in the target code;
a first code execution module, configured to execute the target code; and
a second patch code execution module, configured to jump to the second patch code and executing the second patch code, in response to executing the second instruction code in the target code.

14. A non-transitory computer readable storage medium, on which computer program instructions are stored, **characterized by** that the computer program instructions, when executed by a processor (111), cause the processor (111) to implement the ROM code execution method according to any one of claims 1 to 7.

15. An electronic device (11), **characterized by** that the electronic device comprises:
one or more processors (111); and
a memory (112) in which computer program instructions are stored,
wherein the computer program instructions, when executed by the processor (111), cause the processor (111) to implement the ROM code execution method according to any one of claims 1 to 7.
